# EUROPÄISCHE PATENTANMELDUNG

(11) **EP 2 278 128 A2**
(43) Veröffentlichungstag der Anmeldung: **26.01.2011**
(21) Anmeldenummer: 10169605.2
(22) Anmeldetag: 15.07.2010
(51) Int. Cl.: F01D 25/28, F01D 25/30

(54) **Gasturbine mit Abgasgehäuse sowie Verfahren zum Herstellen einer solchen Gasturbine**

(30) Priorität: 21.07.2009 US 227161 P
(71) Anmelder: Alstom Technology Ltd, 5400 Baden (CH)
(72) Erfinder: Ruiz, Jose, Greenacres, FL 33463 (US); Maurell, Orestes Jesus, West Palm Beach, FL 33412 (US); Powell, Kevin, Jupiter, FL 33458 (US); Siegert, Harold, Jupiter, FL 33478 (US); Carpenter, Kevin, Palm Beach Gardens, FL 33418 (US)

(57) **Zusammenfassung**

Die Erfindung betrifft eine Gasturbine (10) mit einem am Ausgang der Turbine mit Abstand zum tragenden Fundament (22) angeordneten, eine Aussenschale (20a) umfassenden, ringförmigen Abgasgehäuse (16)

Bei einer solchen Gasturbine wird ein Durchhängen des Abgasgehäuses (16) dadurch vermieden, dass zum Auffangen von Verformungen des Abgasgehäuses (16) zwischen dem Fundament (22) und der Aussenschale (20a) des Abgasgehäuses (16) Abstützvorrichtungen (26, 27, 28) mit jeweils vorgegebener Abstützrichtung angeordnet sind, welche mit einem Ende an der Aussenschale (20a) des Abgasgehäuses (16) befestigt sind und sich mit dem anderen Ende am Fundament (22) abstützen, und dass die Abstützvorrichtungen (26, 27, 28) jeweils eine in Abstützrichtung wirkende, vorbelastete Federstütze (30) aufweisen.

## Beschreibung

### TECHNISCHES GEBIET

Die vorliegende Erfindung bezieht sich auf das Gebiet der Technik von Gasturbinen. Sie betrifft eine Gasturbine gemäss dem Oberbegriff des Anspruchs 1 sowie ein Verfahren zu deren Herstellung.

### STAND DER TECHNIK

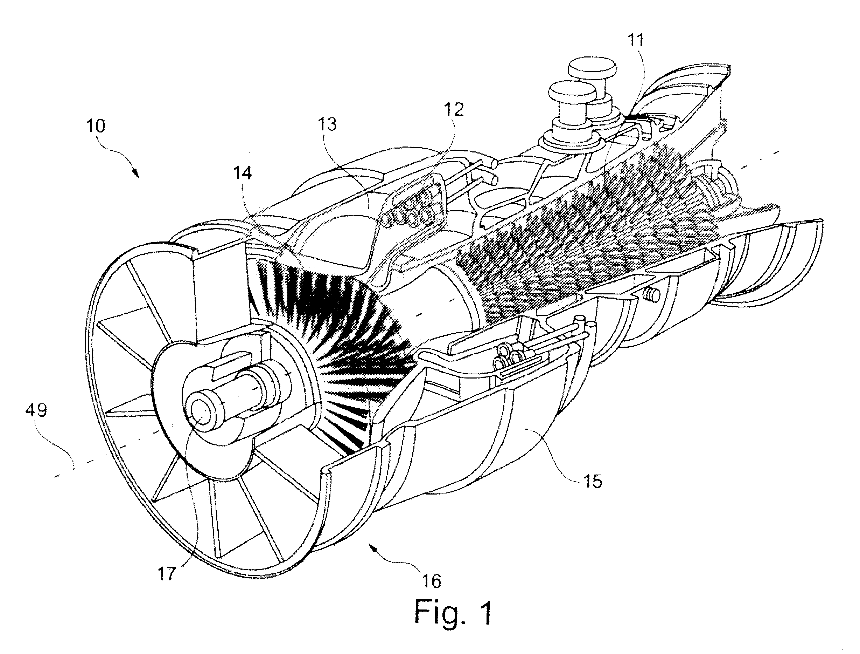

Seit längerem haben sich grosse, stationäre Gasturbinen bei der Energieerzeugung in Kombikraftwerken oder einer anderen Umgebung bewährt (siehe z.B. D. K. Mukherjee, State-of-the-art gas turbines - a brief update ABB Review 2/1997, S.4-14 (1997)). Eine der dort aufgeführten Gasturbinen, die GT13E2 mit einer Leistung von 165 MW, ist in Fig. 1 in teilweise geschnittener, perspektivischer Ansicht wiedergegeben.

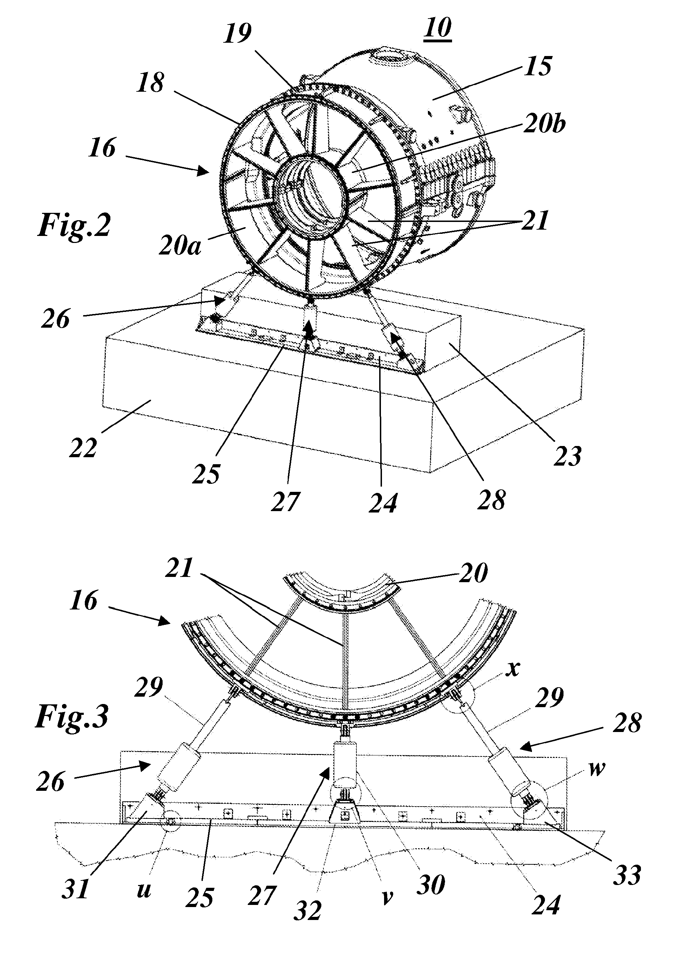

Die Gasturbine 10 aus Fig. 1 umfasst einen um eine Maschinenachse 49 drehbar gelagerten Rotor mit einer Rotorwelle 17 und einer Beschaufelung, die einerseits zu einem Verdichter 11 für die angesaugte Verbrennungsluft und andererseits zu einer Turbine 14 für die Entspannung des erzeugten Heissgases gehört. Zwischen Verdichter 11 und Turbine 14 ist eine Brennkammer 13 angeordnet, in die eine ringförmige Anordnung von Brennern 12 zur Verbrennung ein Brennstoff-LuftGemisch eindüst. Die Brennkammer 13 und die anschliessende Turbine 14 sind von einem Aussengehäuse 15 umgeben, an das ein ringförmiges Abgasgehäuse 16 angeflanscht ist. Das Abgasgehäuse 16, das in Fig. 2 in seinen Einzelheiten gezeigt ist, umfasst in einer konzentrischen Anordnung eine Aussenschale 20a und eine Innenschale 20b, die durch über den Umfang verteilt angeordnete, radial orientierte Streben 21 untereinander verbunden sind.

Als stationäre Turbine ist die Gasturbine 10 auf einem stabilen Fundament (22 in Fig. 2) aufgebaut und im Ausgangsbereich durch (in Fig. 2 nicht dargestellte) Stützen, die am Aussengehäuse 15 angreifen, auf einem Tragsockel 23 abgestützt. Das Abgasgehäuse 16 selbst ist im Stand der Technik nicht abgestützt. Aufgrund der Massivität und des Gewichtes des Abgasgehäuses 16 kann es unter Umständen zu Absenkungen des Gehäuses kommen, die zu einer Dezentrierung der Lagerung und zu einem Schleifen der Laufschaufeln führen können. Es besteht der Wunsch, bei derartigen Gehäusekonfigurationen solche Absenkungen mit Sicherheit auszuschliessen.

### DARSTELLUNG DER ERFINDUNG

Es ist daher Aufgabe der Erfindung, eine Gasturbine zu schaffen, welche die geschilderten Nachteile bisheriger Gasturbinen vermeidet und sich insbesondere durch eine erhöhte Stabilität des Gehäuses im Abgasbereich auszeichnet, die auch bei bereits vorhandenen Gasturbinen auf einfache Weise nachträglich herbeigeführt werden kann, sowie ein Verfahren zum Herstellen bzw. der Montage solcher Gasturbinen anzugeben.

Die Aufgabe wird durch die Gesamtheit der Merkmale der Ansprüche 1 und 13 gelöst. Wichtig für die Erfindung ist, dass zum Auffangen von Verformungen des Abgasgehäuses zwischen dem Fundament und der Aussenschale des Abgasgehäuses Abstützvorrichtungen mit jeweils vorgegebener Abstützrichtung angeordnet sind, welche mit einem Ende an der Aussenschale des Abgasgehäuses befestigt sind und sich mit dem anderen Ende am Fundament abstützen, und dass die Abstützvorrichtungen jeweils eine in Abstützrichtung wirkende, vorbelastete Federstütze aufweisen.

Eine Ausgestaltung der Erfindung ist **dadurch gekennzeichnet, dass** mehrere Abstützvorrichtungen mit unterschiedlichen Abstützrichtungen vorgesehen sind, welche symmetrisch zu einer durch die Maschinenachse gehenden vertikalen Mittelebene angeordnet sind.

Vorzugsweise sind drei separate Abstützvorrichtungen vorgesehen, von denen die mittlere Abstützvorrichtung in der durch die Maschinenachse gehenden vertikalen Mittelebene liegt, während die beiden anderen Abstützvorrichtungen Abstützrichtungen aufweisen, die aus der durch die Maschinenachse gehenden vertikalen Mittelebene um einen Winkel zwischen 30° und 40°, vorzugsweise etwa 36°, herausgekippt sind.

Um thermische Ausdehnungen aufzufangen, ist es dabei von Vorteil, wenn im kalten Zustand der Gasturbine die Abstützrichtung der mittleren Abstützvorrichtung aus der Vertikalen um einige Grad, vorzugsweise 6,9°, verkippt ist, und die Abstützrichtungen der beiden anderen Abstützvorrichtungen aus der radialen Richtung um einige Grad, vorzugsweise 6°, verkippt sind.

Eine andere Ausgestaltung der Erfindung zeichnet sich dadurch aus, dass die Abstützvorrichtungen mit ihren Enden an der Aussenschale des Abgasgehäuses und am Fundament zur Aufnahme von Wärmedehnungen verschwenkbar angelenkt sind.

Eine weitere Ausgestaltung ist **dadurch gekennzeichnet, dass** auf der Oberseite des Fundaments eine Fundamentplatte befestigt ist, und dass auf der Fundamentplatte eine Basisplatte angeordnet ist, welche für jede der Abstützvorrichtungen einen entsprechenden, auf die jeweilige Abstützrichtung abgestimmten Abstützblock trägt, und dass die Abstützvorrichtungen an den Abstützblöcken verschwenkbar angelenkt sind.

Insbesondere ist zum verschwenkbaren Anlenken der Abstützvorrichtungen an den Abstützblöcken jeweils eine Gabelkopf-Nivellierschraube vorgesehen, wobei die Gabelkopf-Nivellierschraube im Abstützblock in Abstützrichtung verschiebbar gelagert ist und sich über in Abstützrichtung relativ zur Gabelkopf-Nivellierschraube verstellbare Abstützmittel am Abstützblock abstützt.

Eine andere Ausgestaltung zeichnet sich dadurch aus, dass die Gabelkopf-Nivellierschrauben jeweils mit einem Aussengewinde versehen sind, und dass die Abstützmittel jeweils einen Feststellring umfassen, der mit einem entsprechenden Innengewinde auf die Gabelkopf-Nivellierschraube aufgeschraubt ist.

Vorzugsweise sind in jedem der Abstützblöcke Mittel zum hydraulischen Vorbelasten der Abstützvorrichtungen vorgesehen.

Die hydraulischen Vorbelastungsmittel umfassen insbesondere Zugangsöffnungen in den Abstützblöcken, in welche ein Hydraulikstempel zum hydraulischen Verschieben der Gabelkopf-Nivellierschrauben in Abstützrichtung eingeschoben werden kann.

Gemäss einer anderen Ausgestaltung der Erfindung sind die Federstützen als Gelenkfederstützen ausgebildet.

Eine weitere Ausgestaltung ist **dadurch gekennzeichnet, dass** für jede der Abstützvorrichtungen ein an der Aussenschale des Abgasgehäuses anliegender und befestigter Adapterblock vorgesehen ist, und dass die Abstützvorrichtungen an den Adapterblöcken verschwenkbar angelenkt sind.

Das erfindungsgemässe Verfahren zum Herstellen einer Gasturbine ist **dadurch gekennzeichnet, dass** in einem ersten Schritt am Fundament und an der Aussenschale des Abgasgehäuses Mittel zum Befestigen der Abstützvorrichtungen angebracht werden, dass in einem zweiten Schritt die Abstützvorrichtungen ohne Vorbelastung mit den Befestigungsmitteln verbunden werden, dass in einem dritten Schritt die Abstützvorrichtungen vorbelastet werden, und dass in einem vierten Schritt die Abstützvorrichtungen im vorbelasteten Zustand fixiert werden.

Bevorzugt wird dabei so vorgegangen, dass im ersten Schritt die Befestigungsmittel an dem Fundament und an der Aussenschale des Abgasgehäuses festgeschraubt werden, und dass im dritten Schritt die Abstützvorrichtungen mittels eines einsetzbaren Hydraulikstempels hydraulisch vorbelastet werden.

Insbesondere erfolgt im vierten Schritt die Fixierung der Abstützvorrichtungen im vorbelasteten Zustand durch Verdrehen eines auf einem Gewinde sitzenden Feststellrings.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer teilweise geschnittenen, perspektivischen Ansicht eine beispielhafte Gasturbine (GT13E2), wie sie für die Anwendung der Erfindung geeignet ist;
- Fig. 2: den ausgangsseitigen Teil der Gasturbine aus Fig. 1 mit dem zugehörigen Fundament und einer zusätzlichen Abstützung des Abgasgehäuses gemäss einem Ausführungsbeispiel der Erfindung;
- Fig. 3: in Richtung der Maschinenachse gesehen eine vergrösserte Darstellung der zusätzlichen Abstützung aus Fig. 2;
- Fig. 4: in einem vergrösserten Ausschnitt aus Fig. 3 die Verbindung zwischen Fundamentplatte und Basisplatte der zusätzlichen Abstützung;
- Fig. 5: in einem vergrösserten Ausschnitt aus Fig. 3 die verschwenkbare Anlenkung der rechten Abstützvorrichtung an der Aussenschale des Abgasgehäuses;
- Fig. 6: in einem vergrösserten Ausschnitt aus Fig. 3 die verschwenkbare und verstellbare Anlenkung der mittleren Abstützvorrichtung am zugehörigen Abstützblock;
- Fig. 7: in einem vergrösserten Ausschnitt aus Fig. 3 die verschwenkbare und verstellbare Anlenkung der rechten Abstützvorrichtung am zugehörigen Abstützblock;
- Fig. 8: die Gabelkopf-Nivellierschraube und den zugehörigen Feststellring der mittleren Abstützvorrichtung aus Fig. 3;
- Fig. 9: die Gabelkopf-Nivellierschraube und den zugehörigen Feststellring der seitlichen Abstützvorrichtungen aus Fig. 3;
- Fig. 10: die Verkippung der Abstützvorrichtungen aus der radialen Richtung bei der zusätzlichen Abstützung gemäss Fig. 2 bzw. 3;
- Fig. 11: das Vorgehen beim Vorbelasten der mittleren Abstützvorrichtung aus Fig. 3;
- Fig. 12: das Vorgehen beim Vorbelasten der rechten Abstützvorrichtung aus Fig. 3; und
- Fig. 13: alternativ zu Fig. 10 die Befestigung des Adapterblocks der Abstützvorrichtung mittels mehrerer Flanschklammern.

### WEGE ZUR AUSFÜHRUNG DER ERFINDUNG

In Fig. 2 ist der ausgangsseitige Teil der Gasturbine aus Fig. 1 mit dem zugehörigen Fundament und einer zusätzlichen Abstützung des Abgasgehäuses gemäss einem Ausführungsbeispiel der Erfindung wiedergegeben. Von der Gasturbine 10 sind der grösseren Übersichtlichkeit wegen nur das die Turbine und einen Teil der Brennkammer umschliessende Aussengehäuse 15 sowie das sich in Strömungsrichtung anschliessende Abgasgehäuse 16 dargestellt. Für das bei früheren Gasturbinen unabgestützte Abgasgehäuse 16 sind hier nunmehr drei jeweils in einer bestimmten Abstützrichtung wirkenden Abstützvorrichtungen 26, 27 und 28 vorgesehen, welche das Abgasgehäuse 16 gegen das darunter liegende Fundament 22 der Gasturbine 10 abstützen und so ein merkliches Herabhängen des schweren Gehäuses verhindern.

Die drei Abstützvorrichtungen 26, 27 und 28 liegen vorzugsweise jeweils in einer Ebene, die durch entsprechende radiale Streben 21 zwischen der Innenschale 20b und der Aussenschale 20a des Abgasgehäuses 16 definiert ist. Sie sind zugleich symmetrisch zu einer vertikalen, durch die Maschinenachse 49 gehenden Mittelebene angeordnet und ausgerichtet. Die Ebenen der seitlichen Abstützvorrichtungen 26 und 28 schliessen mit der Mittelebene einen Winkel von jeweils 36° ein. Die Abstützvorrichtungen 26, 27 und 28 legen jeweils eine Abstützrichtung fest, die aus der radialen Richtung heraus stromabwärts verkippt ist. Bei der mittleren Abstützvorrichtung 27 beträgt der Verkippungswinkel im kalten Zustand der Maschine vorzugsweise 9,6° und erhöht sich bei Betriebstemperatur um 1,7°. Bei den seitlichen Abstützvorrichtungen 26 und 28 beträgt der Verkippungswinkel vorzugsweise 6° und erhöht sich bei Betriebstemperatur um 0,9°. Andere Maschinenabmessungen erfordern dabei andere Verkippungswinkel.

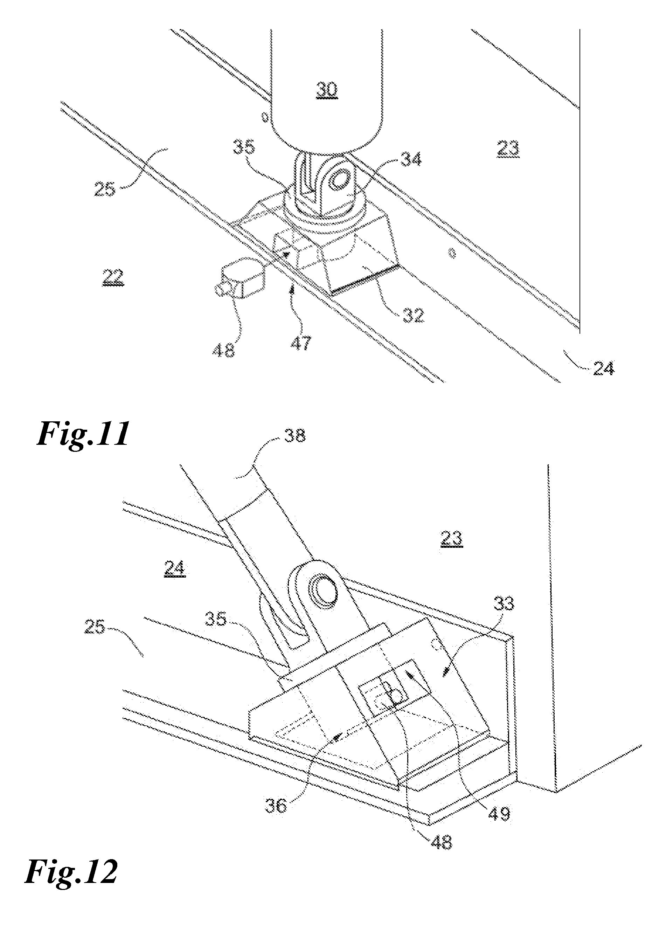

Jede der aus geometrischen Gründen unterschiedlich langen Abstützvorrichtungen 26, 27, 28 enthält eine in Abstützrichtung wirkende Federstütze 30, die als Gelenkfederstütze ausgebildet ist. Im Handel sind derartige Federstützen kommerziell erhältlich. Ein geeigneter Typ ist beispielsweise der Typ 20-91-14 der Firma Lisega, der bis zu 100kN Federkraft bereitstellen kann bei einer Federkonstante von 1333N/mm. Bei der mittleren Abstützvorrichtung 27 ist die Federstütze 30 direkt einsetzbar, bei den seitlichen Abstützvorrichtungen 26, 28 jeweils mit einer Verlängerung (29 in Fig. 3 bzw. 38 in Fig. 12).

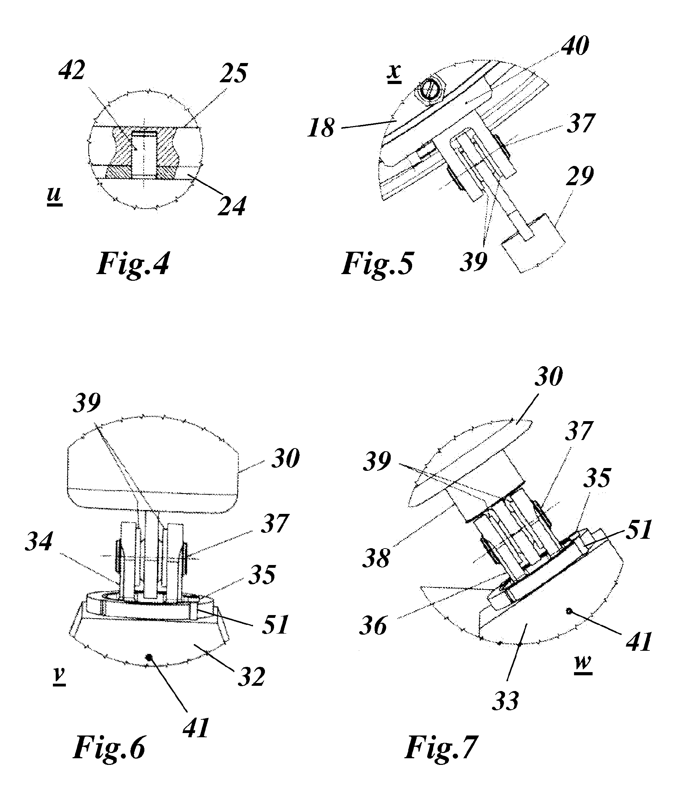

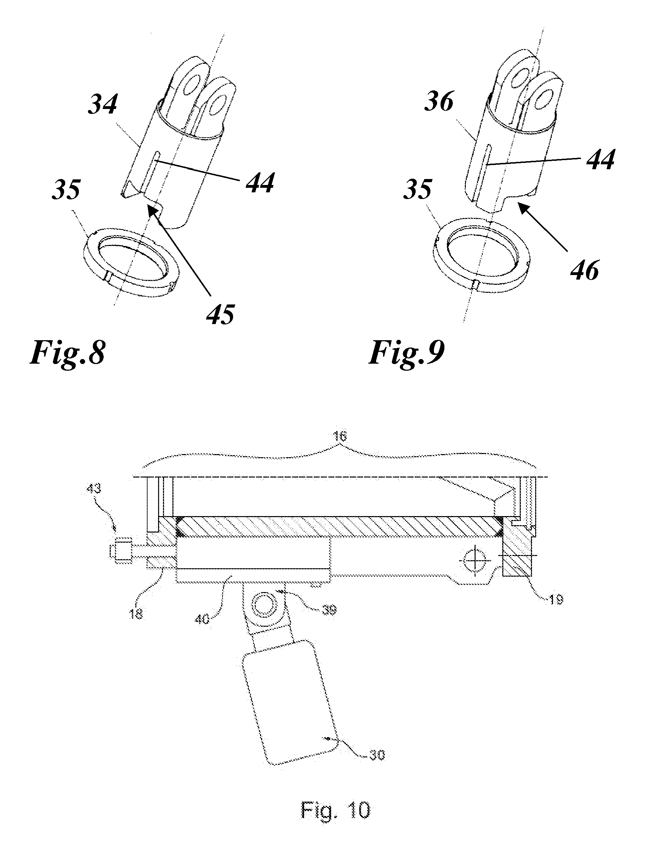

Die Abstützvorrichtungen 26, 27, 28 sind am Abgasgehäuse 16 an zugehörigen Adapterblöcken 40 (Fig. 5, 10) in axialer Richtung verschwenkbar angelenkt, um thermischen Ausdehnungen des Abgasgehäuses 16 problemlos folgen zu können. Desgleichen sind die Abstützvorrichtungen 26, 27, 28 fundamentseitig in axialer Richtung verschwenkbar an zugehörigen Abstützblöcken 31, 32, 33 angelenkt. Die Adapterblöcke 40 sind auf der Aussenseite der Aussenschale 20a des Abgasgehäuses 16 zwischen einem eingangsseitigen Flansch 19 und einem ausgangsseitigen Flansch 18 angeordnet und mittels einer Verschraubung 43 befestigt. Sie sind der Krümmung der Aussenschale 20a angepasst. An jedem Adapterblock 40 ist ein Gabelkopf 39 (Fig. 5, 10) befestigt (z.B. angeschweisst), an dem die Abstützvorrichtung 26, 27, 28 mittels eines Gelenkbolzens 37 angelenkt ist.

Fundamentseitig sind die entsprechenden Schwenkverbindungen wie folgt aufgebaut: In der stromabwärts gelegenen Ecke zwischen Fundament 22 und Tragsockel 23 ist eine als rechtwinklige Winkelleiste ausgebildet Fundamentplatte 24 befestigt. Parallel zur Oberfläche des Fundaments 22 liegt auf der Fundamentplatte 24 mittels Fixierstiften 42 fixiert (Fig. 4) eine verstärkte Basisplatte 25 auf. Auf der Basisplatte sind die drei Abstützblöcke 31, 32 und 33 befestigt. Der für die mittlere Abstützvorrichtung 27 vorgesehene Abstützblock 32 hat eine horizontale Oberfläche. Die beiden für die seitlichen Abstützvorrichtungen 26 und 28 vorgesehenen Abstützblöcke 31 und 33 haben eine um ±36° verkippte schräge Oberfläche, die der jeweiligen Abstützrichtung angepasst ist.

In den Abstützblöcken 31, 32 und 33 ist jeweils senkrecht zur Oberseite eine Bohrung eingebracht, die eine Gabelkopf-Nivellierschraube 34 bzw. 36 der in Fig. 8 bzw. Fig. 9 gezeigten Art aufnimmt. Die Gabelkopf-Nivellierschraube 34 der in Fig. 8 gezeigten Art ist für den Abstützblock 32 der mittleren Abstützvorrichtung 27 vorgesehen; die Gabelkopf-Nivellierschraube 36 der in Fig. 9 gezeigten Art ist für die Abstützblöcke 31 und 33 der seitlichen Abstützvorrichtungen 26 bzw. 28 vorgesehen. Die Gabelkopf-Nivellierschrauben 34, 36 tragen ein Aussengewinde und weisen seitlich einen in axialer Richtung verlaufenden Führungsschlitz 44 auf, der mit einem in den Abstützblöcken 31, 32, 33 eingesetzten, in die Bohrung seitlich hineinragenden Führungsstift 41 (Fig. 6, 7) korrespondiert und die Gabelkopf-Nivellierschrauben 34, 36 verdrehsicher führt.

Zu den Gabelkopf-Nivellierschrauben 34, 36 gehört jeweils ein Feststellring 35 mit Innengewinde, der auf die Gabelkopf-Nivellierschrauben 34, 36 aufgeschraubt werden kann. Des Weiteren weisen die Gabelkopf-Nivellierschrauben 34, 36 am unteren Ende eine quer verlaufenden Ausnehmung 45 bzw. 46 mit rechteckiger Querschnittskontur auf, die der Aufnahme eines Hydraulikstempels (48 in Fig. 11, 12) dient. Die beiden Ausnehmungen 45 und 46 sind relativ zueinander um 90° verdreht, weil beim mittleren Abstützblock 32 der Hydraulikstempel 48 von vorne eingeschoben wird (Fig. 11), während er bei den seitlichen Abstützblöcken 31, 33 von der Seite eingeschoben wird (Fig. 12).

Das obere Ende der Gabelkopf-Nivellierschrauben 34, 36 ist als Gabelkopf 39 ausgebildet, an dem die Abstützvorrichtungen 26, 27, 28 mittels eines Gelenkbolzens 37 angelenkt sind (Fig. 6, 7). Die Gabelkopf-Nivellierschrauben 34, 36 sind in der Bohrung im zugehörigen Abstützblock 31, 32, 33 in Abstützrichtung verschiebbar gelagert und stützen sich über den aufgeschraubten Feststellring 35 an der Oberseite des jeweiligen Abstützblocks 31, 32, 33 ab (Fig. 6, 7).

Beim Montieren der Abstützvorrichtungen werden - wie dies in Fig. 11 und 12 gezeigt ist - die Abstützvorrichtungen zunächst ohne Vorbelastung der Federstütze 30 an den Adapterblöcken 40 und den in den Abstützblöcken 31, 32, 33 sitzenden Gabelkopf-Nivellierschrauben 34, 36 angelenkt. Dann wird durch Zugangsöffnungen 47 bzw. 49 in den Abstützblöcken 31, 32, 33 ein Hydraulikstempel 48 in die Ausnehmungen 45, 46 am unteren Ende der Gabelkopf-Nivellierschrauben 34, 36. Durch Hochdrücken des Hydraulikstempels 48 in der Abstützrichtung wird die Gabelkopf-Nivellierschraube 34, 36 teilweise aus der Bohrung herausgedrückt und die zugehörige Federstütze 30 der Abstützvorrichtung zusammengedrückt und damit vorbelastet. Die erzeugte Vorbelastung kann berechnet werden, indem der Hydraulikdruck abgelesen und mit der effektiven hydraulischen Fläche des Hydraulikstempels 48 multipliziert wird. Im vorbelasteten Zustand wird dann der Feststellring 35 soweit nach unten geschraubt, bis er auf der Oberseite des Abstützblocks aufliegt und dann mittels eines Arretierstifts 51 gesichert. Wird dann der Druck aus dem Hydraulikstempel 48 herausgenommen, stützt sich die vorbelastete Abstützvorrichtung über den Feststellring am Abstützblock ab. Auf diese Weise kann die erforderliche Vorbelastung für jede der Abstützvorrichtungen 26, 27, 28 individuell eingestellt werden.

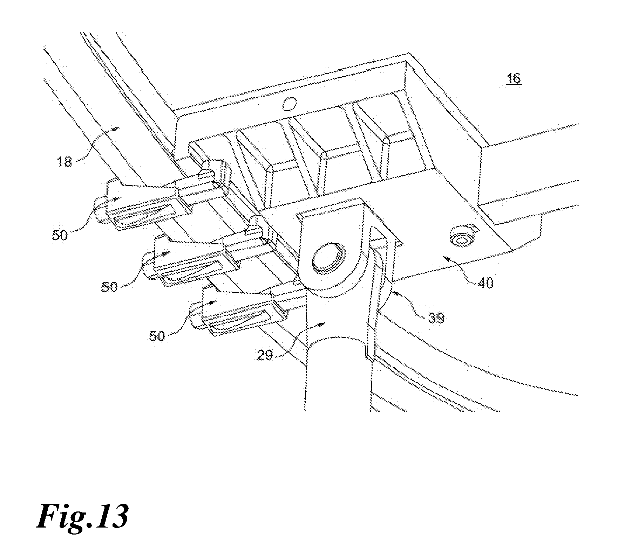

Anstelle der in Fig. 10 gezeigten Verschraubung 43 können aber auch gemäss Fig. 13 mehrere Flanschklammern 50 verwendet werden, um den entsprechend angepassten Adapterblock 40 am Flansch 18 zu befestigen. Diese Flanschklammern 50 sind ohnehin vorhanden, wenn der am Abgasgehäuse 16 stromabwärts angesetzte Abgasdiffusor-Abschnitt mit derartigen Flanschklammern am Flansch 18 angeflanscht ist.

Die Vorteile der Erfindung sind vielfältig:
- An vorbestimmten wichtigen Punkten des Gehäuses kann eine individuelle einstellbare, dem Durchhängen entgegenwirkende Kraft auf das Gehäuse ausgeübt werden.
- Die Kraft bleibt dank der vorbelasteten Federstütze dauerhaft bestehen.
- Die Kräfte werden sicher in das Fundament eingeleitet.
- Die Schwenkverbindung zwischen Gehäuse und Fundament einerseits und der Abstützvorrichtung andererseits neutralisiert thermische Ausdehnungen der Maschine.
- Der Aufbau und Einbau der Abstützvorrichtungen ist sehr einfach.
- Der Einbau kann nachträglich von aussen vorgenommen werden, weil eine Demontage bzw. Teildemontage der Maschine nicht notwendig ist.
- Es lassen sich handelsübliche Bauteile einsetzen, was die Lösung insgesamt verbilligt.

### BEZUGSZEICHENLISTE

- 10: Gasturbine (z.B. GT13E2)
- 11: Verdichter
- 12: Brenner
- 13: Brennkammer
- 14: Turbine
- 15: Aussengehäuse
- 16: Abgasgehäuse
- 17: Rotorwelle
- 18,19: Flansch
- 20a: Aussenschale (Abgasgehäuse)
- 20b: Innenschale (Abgasgehäuse)
- 21: Strebe
- 22: Fundament
- 23: Tragsockel
- 24: Fundamentplatte
- 25: Basisplatte
- 26,27,28: Abstützvorrichtung
- 29,38: Verlängerung (Federstütze)
- 30: Federstütze (z.B. Lisega Typ 20-19)
- 31,32,33: Abstützblock
- 34,36: Gabelkopf-Nivellierschraube
- 35: Feststellring
- 37: Gelenkbolzen
- 39: Gabelkopf
- 40: Adapterblock
- 41: Führungsstift
- 42: Fixierstift
- 43: Verschraubung
- 44: Führungsschlitz
- 45,46: Ausnehmung
- 47,49: Zugangsöffnung
- 48: Hydraulikstempel
- 49: Maschinenachse
- 50: Flanschklammer
- 51: Arretierstift

## Patentansprüche

1. Gasturbine (10) mit einem am Ausgang der Turbine (14) mit Abstand zum tragenden Fundament (22) angeordneten, eine Aussenschale (20a) umfassenden, ringförmigen Abgasgehäuse (16), **dadurch gekennzeichnet, dass** zum Auffangen von Verformungen des Abgasgehäuses (16) zwischen dem Fundament (22) und der Aussenschale (20a) des Abgasgehäuses (16) Abstützvorrichtungen (26, 27, 28) mit jeweils vorgegebener Abstützrichtung angeordnet sind, welche mit einem Ende an der Aussenschale (20a) des Abgasgehäuses (16) befestigt sind und sich mit dem anderen Ende am Fundament (22) abstützen, und dass die Abstützvorrichtungen (26, 27, 28) jeweils eine in Abstützrichtung wirkende, vorbelastete Federstütze (30) aufweisen.

2. Gasturbine nach Anspruch 1, **dadurch gekennzeichnet, dass** mehrere Abstützvorrichtungen (26, 27, 28) mit unterschiedlichen Abstützrichtungen vorgesehen sind, welche symmetrisch zu einer durch die Maschinenachse (49) gehenden vertikalen Mittelebene angeordnet sind.

3. Gasturbine nach Anspruch 2, **dadurch gekennzeichnet, dass** drei separate Abstützvorrichtungen (26, 27, 28) vorgesehen sind, von denen die mittlere Abstützvorrichtung (27) in der durch die Maschinenachse (49) gehenden vertikalen Mittelebene liegt, während die beiden anderen Abstützvorrichtungen (26, 28) Abstützrichtungen aufweisen, die aus der durch die Maschinenachse (49) gehenden vertikalen Mittelebene um einen Winkel zwischen 30° und 40°, vorzugsweise etwa 36°, herausgekippt sind.

4. Gasturbine nach Anspruch 3, **dadurch gekennzeichnet, dass** im kalten Zustand der Gasturbine (10) die Abstützrichtung der mittleren Abstützvorrichtung (27) aus der Vertikalen um einige Grad, vorzugsweise 9,6°, verkippt ist und die Abstützrichtungen der beiden anderen Abstützvorrichtungen (26, 28) aus der radialen Richtung um einige Grad, vorzugsweise 6°, verkippt sind.

5. Gasturbine nach einem der Ansprüche 1 bis 4, **dadurch gekennzeichnet, dass** die Abstützvorrichtungen (26, 27, 28) mit ihren Enden an der Aussenschale (20a) des Abgasgehäuses (16) und am Fundament (22) zur Aufnahme von Wärmedehnungen verschwenkbar angelenkt sind.

6. Gasturbine nach Anspruch 5, **dadurch gekennzeichnet, dass** auf der Oberseite des Fundaments (22) eine Fundamentplatte (24)befestigt ist, dass auf der Fundamentplatte (24) eine Basisplatte (25) angeordnet ist, welche für jede der Abstützvorrichtungen (26, 27, 28) einen entsprechenden, auf die jeweilige Abstützrichtung abgestimmten Abstützblock (31, 32, 33) trägt, und dass die Abstützvorrichtungen (26, 27, 28) an den Abstützblöcken (31, 32, 33) verschwenkbar angelenkt sind.

7. Gasturbine nach Anspruch 6, **dadurch gekennzeichnet, dass** zum verschwenkbaren Anlenken der Abstützvorrichtungen (26, 27, 28) an den Abstützblöcken (31, 32, 33) jeweils eine Gabelkopf-Nivellierschraube (34, 36) vorgesehen ist, dass die Gabelkopf-Nivellierschraube (34, 36) im Abstützblock (31, 32, 33) in Abstützrichtung verschiebbar gelagert ist und sich über in Abstützrichtung relativ zur Gabelkopf-Nivellierschraube (34, 36) verstellbare Abstützmittel (35) am Abstützblock (31, 32, 33) abstützt.

8. Gasturbine nach Anspruch 7, **dadurch gekennzeichnet, dass** die Gabelkopf-Nivellierschrauben (34, 36) jeweils mit einem Aussengewinde versehen sind, und dass die Abstützmittel jeweils einen Feststellring (35) umfassen, der mit einem entsprechenden Innengewinde auf die Gabelkopf-Nivellierschraube (34, 36) aufgeschraubt ist.

9. Gasturbine nach Anspruch 8, **dadurch gekennzeichnet, dass** in jedem der Abstützblöcke (31, 32, 33) Mittel (45,..,49) zum hydraulischen Vorbelasten der Abstützvorrichtungen (26, 27, 28) vorgesehen sind.

10. Gasturbine nach Anspruch 9, **dadurch gekennzeichnet, dass** die hydraulischen Vorbelastungsmittel Zugangsöffnungen (47, 49) in den Abstützblöcken (31, 32, 33) umfassen, in welche ein Hydraulikstempel (48) zum hydraulischen Verschieben der Gabelkopf-Nivellierschrauben (34, 36) in Abstützrichtung eingeschoben werden kann.

11. Gasturbine nach einem der Ansprüche 1 bis 10, **dadurch gekennzeichnet, dass** die Federstützen (35) als Gelenkfederstützen ausgebildet sind.

12. Gasturbine nach Anspruch 5, **dadurch gekennzeichnet, dass** für jede der Abstützvorrichtungen (26, 27, 28) ein an der Aussenschale (20a) des Abgasgehäuses (16) anliegender und befestigter Adapterblock (40) vorgesehen ist, und dass die Abstützvorrichtungen (26, 27, 28) an den Adapterblöcken (40) verschwenkbar angelenkt sind.

13. Verfahren zum Herstellen einer Gasturbine nach einem der Ansprüche 1 bis 12, **dadurch gekennzeichnet, dass** in einem ersten Schritt am Fundament (22) und an der Aussenschale (20a) des Abgasgehäuses (16) Mittel (24, 25, 31, 32, 33; 40) zum Befestigen der Abstützvorrichtungen (26, 27, 28) angebracht werden, dass in einem zweiten Schritt die Abstützvorrichtungen (26, 27, 28) ohne Vorbelastung mit den Befestigungsmitteln (24, 25, 31, 32, 33; 40) verbunden werden, dass in einem dritten Schritt die Abstützvorrichtungen (26, 27, 28) vorbelastet werden, und dass in einem vierten Schritt die Abstützvorrichtungen (26, 27, 28) im vorbelasteten Zustand fixiert werden.

14. Verfahren nach Anspruch 13, **dadurch gekennzeichnet, dass** im ersten Schritt die Befestigungsmittel (24, 25, 31, 32, 33; 40) an dem Fundament (22) und an der Aussenschale (20a) des Abgasgehäuses (16) festgeschraubt werden, und dass im dritten Schritt die Abstützvorrichtungen (26, 27, 28) mittels eines einsetzbaren Hydraulikstempels (48) hydraulisch vorbelastet werden.

15. Verfahren nach Anspruch 13 oder 14, **dadurch gekennzeichnet, dass** im vierten Schritt die Fixierung der Abstützvorrichtungen (26, 27, 28) im vorbelasteten Zustand durch Verdrehen eines auf einem Gewinde sitzenden Feststellrings (35) erfolgt.
